(19) Europäisches Patentamt
European Patent Office
Office européen des brevets

(11) Veröffentlichungsnummer: **0 533 725 B1**

# (12) EUROPÄISCHE PATENTSCHRIFT

(45) Veröffentlichungstag der Patentschrift: **25.01.95**

(51) Int. Cl.6: **B01D 37/03**, F26B 1/00, B03D 1/10, B03B 1/04, C09K 3/18, B01D 12/00

(21) Anmeldenummer: **91910596.5**

(22) Anmeldetag: **06.06.91**

(86) Internationale Anmeldenummer:
**PCT/EP91/01049**

(87) Internationale Veröffentlichungsnummer:
**WO 91/19556 (26.12.91 91/29)**

## (54) HILFSMITTEL BEI DER FILTRATION UND/ODER ENTWÄSSERUNG VON MINERAL- UND KOHLESUSPENSIONEN.

(30) Priorität: **15.06.90 DE 4019174**

(43) Veröffentlichungstag der Anmeldung:
**31.03.93 Patentblatt 93/13**

(45) Bekanntmachung des Hinweises auf die Patenterteilung:
**25.01.95 Patentblatt 95/04**

(84) Benannte Vertragsstaaten:
**AT BE DE ES FR GB IT SE**

(56) Entgegenhaltungen:
**WO-A-85/03065**
**FR-A- 2 502 509**
**US-A- 4 156 649**

**Erzmetall, volume 30, No. 7/8, 1977, R. Niessen; "Erfahrungen mit dem Einsatz von Netzmitteln bei der Fein- und Feinstkornentwässerung in der Steinkohlenaufbereitung", pages 292-294.**

**Fett Wissenschaft Technology, Fat Science Technology, volume 89, No 3, 1987, R. Piorr et al.: "Schumarme, biologisch abbaubare nichtionische Tenside", pages 106-111.**

(73) Patentinhaber: **Henkel Kommanditgesellschaft auf Aktien**

**D-40191 Düsseldorf (DE)**

(72) Erfinder: **KÖSTER, Rita**
**Taubenstrasse 7**
**D-4000 Düsseldorf (DE)**
Erfinder: **SPECKMANN, Horst, Dieter**
**Bensberger Weg 6**
**D-4000 Düsseldorf 13 (DE)**
Erfinder: **VON RYBINSKI, Wolfgang**
**Leinenweber Weg 6**
**D-4000 Düsseldorf (DE)**
Erfinder: **KÖPPL, Dieter**
**Am Falder 95**
**D-4000 Düsseldorf 13 (DE)**

EP 0 533 725 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Alkyl- und/oder Alkenylpolyalkylenglycolethern als Hilfsmittel bei der Filtration und/oder Entwässerung von Mineral- und Kohlesuspensionen.

Bei der Aufarbeitung von Erzen fallen häufig Suspensionen an, die vor einer Weiterverarbeitung oder Deponierung entwässert werden müssen. Dies betrifft beispielsweise Mineralkonzentrate, die durch Anreicherungsverfahren, wie z. B. Flotation oder magnetische Separation, gewonnen werden, sowie Kohle und die Berge der Kohleflotation. Aus wirtschaftlichen Gründen ist es wünschenswert, daß die Filtrationsgeschwindigkeit bei der anschließenden Entwässerung der Suspensionen möglichst hoch und der Restwassergehalt des Filterkuchens möglichst gering ist. Besondere Schwierigkeiten bereiten bei der Filtration Erze und Kohlen, die einen hohen Feinstkornanteil aufweisen.

Es ist bekannt, daß sich Tenside, wie beispielsweise Dialkylsulfosuccinate **[US-A-2,266,954]** oder Alkylphenolpolyglycolether **[Erzmetall 30, 292 (1977)]**, infolge ihrer oberflächenaktiven Eigenschaften als Hilfsmittel für die Entwässerung von Steinkohlesuspensionen eignen. Bei Einsatz von Tensiden der genannten Art für die Filtration von Mineralsuspensionen tritt bei dem oft im Kreislauf geführten Betriebswasser eine starke Schaumbildung auf, die zur Behinderung anderer Aufbereitungsprozesse führt.

Zur Verbesserung der Filtration von Mineral- und Kohlesuspensionen kommen ferner auch organische Polyelektrolyte, wie z. B. Polyacrylamide oder Stärkederivate, in Betracht. Derartige Hilfsmittel bewirken zwar häufig eine Steigerung der Filtrationsgeschwindigkeit, der Restwassergehalt der Mineralkonzentrate bleibt jedoch unverändert oder wird gegenüber einer Filtration ohne Filtrationshilfsmittel sogar noch erhöht.

Die Aufgabe der Erfindung bestand darin, neue Filtrationshilfsmittel zu entwickeln, deren Verwendung frei von den geschilderten Nachteilen ist.

Gegenstand der Erfindung ist die Verwendung von Alkyl- und/oder Alkenylpolyalkylenglycolethern der Formel **(I)**,

$$R^1\text{-O-}(CH_2\overset{\displaystyle R^3\atop|}{C}HO)_n\text{-}R^2 \qquad (I)$$

in der $R^1$ für einen geradkettigen oder verzweigten Alkyl-und/oder Alkenylrest mit 6 bis 22 Kohlenstoffatomen, $R^2$ für einen geradkettigen oder verzweigten Alkylrest mit 1 bis 8 Kohlenstoffatomen oder einen Benzylrest, $R^3$ für Wasserstoff oder einen Methylrest und n für Zahlen von 1 bis 30 stehen, als Hilfsmittel bei der Filtration und/oder Entwässerung von Mineral- und Kohlesuspensionen.

Die Erfindung beruht auf der Erkenntnis, daß die Verwendung von endgruppenverschlossenen Polyglycolethern der genannten Art die Filtrationsgeschwindigkeit und den Restwassergehalt von Mineralsuspensionen vorteilhaft beeinflußt und mit einer sehr geringen Schaumentwicklung verbunden ist.

Alkyl- und/oder Alkenylpolyalkylenglycolether, die im Sinne der Erfindung besonders vorteilhafte Eigenschaften aufweisen, enthalten im Rest $R^1$ 12 bis 18 Kohlenstoffatome, im Rest $R^2$ 4 bis 7 Kohlenstoffatome sowie n = 2 bis 10, vorzugsweise 5 bis 7 Ethylenoxideinheiten.

Alkyl- und/oder Alkenylpolyalkylenglycolether stellen bekannte Substanzen dar, die nach den gängigen Methoden der präparativen organischen Chemie zugänglich sind. Ein Verfahren zu ihrer Herstellung besteht beispielsweise darin, daß man Alkylenoxidaddukte an primäre Alkohole unter den Bedingungen der Williamson'schen Ethersynthese mit einem Alkyl- oder Aralkylhalogenid umsetzt **[Fat Sci.Technol., 89, 106 (1987)]**.

Typische Beispiele für primäre Alkohole mit 6 bis 22 Kohlenstoffatomen als Ausgangsstoffe für die Herstellung der Alkyl- und/oder Alkenylpolyalkylenglycolether sind Capronalkohol, Caprylalkohol, Caprinalkohol, Laurylalkohol, Myristylalkohol, Cetylalkohol, Palmitoleylalkohol, Stearylalkohol, Oleylalkohol, Elaidylalkohol, Petroselinylalkohol, Gadoleylalkohol, Arachidylalkohol, Behenylalkohol oder Erucylalkohol. Ferner können diese Alkohole auch als technische Gemische vorliegen, wie man sie beispielsweise durch Hochdruckhydrierung von Methylesterfraktionen auf Basis pflanzlicher und tierischer Rohstoffe oder durch Hydrierung von Aldehydschnitten aus der Roelen'schen Oxosynthese erhält. Besonders bevorzugt ist technischer Kokosalkohol als Ausgangsstoff für die Herstellung der Polyglycolether.

Die Alkylenoxidanlagerungsprodukte der genannten Alkohole können durchschnittlich n = 1 bis 30 Alkylenoxideinheiten enthalten. Unter Alkylenoxiden sind hierbei Ethylenoxid und Propylenoxid sowie Gemische von Ethylen- und Propylenoxid zu verstehen.

Als Alkylierungsmittel kommen Alkyl- und Aralkylhalogenide mit 1 bis 8 Kohlenstoffatomen, wie beispielsweise Methylchlorid, Butylchlorid oder Benzylchlorid in Betracht. Vorzugsweise wird die Alkylierung mit Butylchlorid oder Benzylchlorid durchgeführt.

Unter den zu entwässernden Suspensionen sind im Sinne der Erfindung wäßrige Aufschlämmungen von Erzen, z. B. Scheelit, Eisenerze, Abgänge aus der magnetischen Separation von Eisenerzen oder gewaschene Kohle zu verstehen.

Üblicherweise werden die Filtrationshilfsmittel in Mengen von 25 bis 1000 g/t einer Mineral- oder Kohlesuspension, bezogen auf den Feststoffgehalt der Suspension, zugesetzt. Im Sinne der vorliegenden Erfindung ist es vorteilhaft, die Alkyl- und oder Alkenylpolyalkylenglycolether in Mengen von 100 bis 500 g/t einzusetzen.

In Rahmen des erfindungsgemäßen Verfahrens können als Filtrationshilfsmittel ferner auch Gemische von Alkyl- und/oder Alkenylpolyalkylenglycolethern mit anderen herkömmlichen Entwässerungshilfsmitteln, wie z. B. Sulfosuccinaten oder Polyacrylamiden eingesetzt werden.

Die nachfolgenden Beispiele sollen den Gegenstand der Erfindung näher erläutern ohne ihn darauf einzuschränken.

## Beispiele

### I. Eingesetzte Filtrationshilfsmittel:

A1) $C_{12-18}$-Kokosfettalkohol-7 Mol EO-butylether
A2) $C_{12-18}$-Kokosfettalkohol-5 Mol EO-butylether
A3) $C_{12-18}$-Kokosfettalkohol-10 Mol EO-butylether
B1) Nonylphenol-10 Mol EO-ether

### II. Enwässerung von Mineralsuspensionen

Beispiel 1:

**Filtration eines Scheeliterzes.** Eingesetzt wurde ein Scheeliterz, dessen Teilchengröße zu 100 Gew.-% kleiner als 25 µm war. Es wurde unter folgenden Bedingungen filtriert:

a) Druckfilter 4 bar

| | |
|---|---|
| Porengröße des Filters | 0,15 µm |
| Feststoffgehalt der Suspension | 40 Gew.-% |

b) Druckfilter 4 bar

| | |
|---|---|
| Porengröße des Filters | 0,20 µm |
| Feststoffgehalt der Suspension | 60 Gew.-% |

Als Filtrationshilfsmittel wurden 500 g/t des Mittels A1) eingesetzt. Die Mineralsuspensionen wurden 5 Minuten in Gegenwart des Filtrationshilfsmittels konditioniert. Der Wassergehalt der Mineralsuspension wurde in Abhängigkeit von der Zeit aus der Menge an Filtrat berechnet. Die Ergebnisse sind in den Tabellen 1 und 2 zusammengefaßt.

Vergleichsbeispiel V1:

Beispiel 1 wurde ohne Filtrationshilfsmittel wiederholt. Die Ergebnisse der Filtrationsversuche sind in den Tabellen 1 und 2 zusammengefaßt.

Vergleichsbeispiel V2:

Beispiel 1 wurde unter Einsatz von 500 g/t des Mittels B1) als Filtrationshilfsmittel wiederholt. Die Ergebnisse der Filtrationsversuche sind in den Tabellen 1 und 2 zusammengefaßt.

Tab.1: Wassergehalt des Filterkuchens bei der Druckfiltration eines Scheeliterzes (Angabe in Gew.-%)
Teilchengröße < 25 µm, pH = 10, Filter : 0,15 µm
Druckfilter 200 ml Inhalt

| Bsp. | Filtrationszeit (s) | | | | | |
|---|---|---|---|---|---|---|
| | 0 | 100 | 200 | 400 | 600 | 800 |
| 1a | 40,0 | 35,0 | 33,5 | 30,0 | 26,5 | 25,0 |
| V1 | 40,0 | 35,5 | 34,0 | 31,5 | 30,0 | 27,5 |
| V2 | 40,0 | 35,5 | 34,0 | 31,0 | 29,0 | 26,0 |

Tab.2: Wassergehalt des Filterkuchens bei der Druckfiltration eines Scheeliterzes (Angabe in Gew.-%)
Teilchengröße < 25 µm, pH = 10, Filter : 0,2 µm
Druckfilter 1 l Inhalt

| Bsp. | Filtrationszeit (s) | | | | | |
|---|---|---|---|---|---|---|
| | 0 | 100 | 200 | 400 | 600 | 800 |
| 1b | 60,0 | 50,0 | 44,5 | 31,0 | 17,0 | 16,0 |
| V1 | 60,0 | 50,5 | 45,5 | 39,0 | 25,0 | 21,0 |
| V2 | 60,0 | 50,5 | 45,0 | 36,0 | 20,0 | 19,5 |

Beispiel 2:

**Filtration der Abgänge aus der magnetischen Separation eines Eisenerzes.** Die Korngröße des überwiegend silikatischen Versuchsmaterials wies zu 75 Gew.-% eine Korngröße < 100 µm auf. Es wurde

unter folgenden Bedingungen filtriert:

| Vakuumfiltration 1 bar | |
|---|---|
| Porengröße des Filters<br>Feststoffgehalt der Suspension | 7,4 µm<br>35 Gew.-% |

Als Filtrationshilfsmittel wurden 500 g/t des Mittels A2) eingesetzt. Die Mineralsuspension wurde 1 Minute in Gegenwart des Filtrationshilfsmittels konditioniert. Nach Ablauf der Filtrationszeit von 60 Sekunden wurde der Filterkuchen bei 105°C bis zur Gewichtskonstanz getrocknet und der Restwassergehalt durch Differenzwägung bestimmt. Die Ergebnisse der Filtrationsversuche sind in Tabelle 3 zusammengefaßt.

Beispiel 3:

Beispiel 2 wurde unter Einsatz von 500 g/t des Mittels A1) wiederholt. Die Ergebnisse der Filtrationsversuche sind in Tabelle 3 zusammengefaßt.

Beispiel 4:

Beispiel 2 wurde unter Einsatz von 500 g/t des Mittels A3) wiederholt. Die Ergebnisse der Filtrationsversuche sind in Tabelle 3 zusammengefaßt.

Vergleichsbeispiel V3:

Beispiel 2 wurde ohne Filtrationshilfsmittel wiederholt. Die Ergebnisse der Filtrationsversuche sind in Tabelle 3 zusammengefaßt.

Vergleichsbeispiel V4:

Beispiel 2 wurde unter Einsatz von 500 g/t des Mittels B1 wiederholt. Die Ergebnisse der Filtrationsversuche sind in Tabelle 3 zusammengefaßt.

Tab.3

| Restwassergehalt des Filterkuchens bei der Vakuumfiltration von Abgängen der magnetischen Separation | |
|---|---|
| Bsp. | Restwassergehalt Gew.-% |
| 2 | 17,5 |
| 3 | 17,0 |
| 4 | 18,0 |
| V3 | 24,0 |
| V4 | 19,0 |

**III. Entwässerung von Kohlesuspensionen**

Verwendet wurde eine gewaschene Feinkohle die 6,8 Gew.-% Wasser, 3,7 Gew.-% Asche und 27,3 Gew.-% flüchtige Bestandteile enthielt. Die Siebanalyse brachte folgende Ergebnisse:

| | |
|---|---|
| - 0,5 mm | 1,5 Gew.-% |
| 0,5 - 2,0 mm | 23,1 Gew.-% |
| 2,0 - 6,3 mm | 51,5 Gew.-% |
| > 6,3 mm | 23,9 Gew.-% |

Beispiele 5 bis 7 , Vergleichsbeispiel V5:

**Test im Druckfilter.** Bei dem verwendeten Druckfilter handelte es sich um eine geschlossene Filternutsche, die mit dem zu entwässernden Gut befüllt wurde. Die Entwässerung erfolgte, indem der Filter unter einen Druck von 3 bar gesetzt wurde. Die Entwässerungszeit betrug 30 s. Als Filtermaterial wurde ein Filtergewebe mit einer Maschenweite von 0,2 mm eingesetzt. Es wurden 50 g Kohle in jeweils 400 ml der wäßrigen Lösungen der Filtrationshilfsmittel A1 und A2 (Konzentrationen 0,01 und 0,1 g/l) suspendiert und nach einer Einwirkzeit von 60 s filtriert. Die Restfeuchte der entwässerten Kohle wurde nach DIN 51 718 durch Trocknung bei 106 °C bestimmt (Beispiele 5 bis 7). Zum Vergleich wurde die Filtration ohne Zusatz eines Filtrationshilfsmittels durchgeführt (V5). Die Ergebnisse sind in Tab.4 zusammengefaßt.

Tab.4

| Filtration einer Kohlesuspension im Druckfilter | | | |
|---|---|---|---|
| Bsp. | Filtrationshilfsmittel | Konz. g/l | Restfeuchte Gew.-% |
| 5 | A1 | 0,01 | 9,4 |
| 6 | A1 | 0,1 | 6,6 |
| 7 | A2 | 0,1 | 8,5 |
| V5 | ohne | | 11,6 |
| Legende: Konz. = Konzentration der wäßrigen Lösung des Filtrationshilfsmittels | | | |

Beispiel 8 bis 11, Vergleichsbeispiel V6:

**Tests in der Becherzentrifuge.** Bei der eingesetzten Zentrifuge handelte es sich um eine Becherzentrifuge, mit der Drehzahlen von 300 bis 3400 UpM und Zentrifugalkennwerte von 15 bis 2000 g erreicht werden konnten. Durch die stufenlose Variation des Zentrifugalkennwertes konnten sowohl langsam laufende Schwingsiebzentrifugen als auch schnell laufende Dekantierzentrifugen simuliert werden.

Als Siebbelag für die Zentrifuge wurden Lochplatten mit Sieböffnungen von 0,4 bis 4,0 mm verwendet. Die als Filtrationshilfsmittel eingesetzten Polyglycolether wurden in Konzentrationen von 0,1 g/l und 1,0 g/l in destilliertem Wasser gelöst. Zur Durchführung der Untersuchungen in der Becherzentrifuge wurden jeweils 400 ml der Filtrationshilfsmittellösung in ein Glasgefäß gefüllt. In diese Lösungen wurden jeweils 25 g Kohle suspendiert, die in den Bechern der Zentrifuge zuvor eingewogen worden waren. Die Benetzungszeit betrug jeweils 60 s. Hieran schloß sich zur Vorentwässerung der Proben eine konstante Abtropfzeit von 180 s an. Die Restfeuchten der Kohleproben nach der Vorentwässerung sind in Tab. 5 zusammengefaßt.

Tab.5

| Vorentwässerung | | | |
|---|---|---|---|
| Bsp. | Filtrationshilfsmittel | Konz. g/l | Restfeuchte Gew.-% |
| 8 | A1 | 0,1 | 39,4 |
| 9 | A1 | 1,0 | 30 |
| 10 | A2 | 0,1 | 39,8 |
| 11 | A2 | 1,0 | 28,6 |
| V6 | ohne | | 43,6 |
| Legende: Konz. = Konzentration der wäßrigen Lösung des Filtrationshilfsmittels | | | |

Beispiele 12 bis 23, Vergleichsbeispiele V7 bis V9:

Für die Entwässerung in der Becherzentrifuge wurden Zentrifugalkennwerte von 43, 111 und 389 g (entsprechend den Drehzahlen von 500 UpM, 800 UpM und 1500 UpM) eingestellt. Die Entwässerungsdauer betrug 30 s. Die Ergebnisse sind in Tab.6 zusammengefaßt.

Tab.6

| Entwässerung bei verschiedenen Zentrifugalkennwerten | | | | |
|---|---|---|---|---|
| Bsp. | Filtrationshilfsmittel | Konz. g/l | ZKW | Restfeuchte Gew.-% |
| 12 | A1 | 0,1 | 43 | 4,6 |
| 13 | A1 | 0,1 | 111 | 4,3 |
| 14 | A1 | 0,1 | 389 | 4,0 |
| 15 | A1 | 1,0 | 43 | 3,5 |
| 16 | A1 | 1,0 | 111 | 3,0 |
| 17 | A1 | 1,0 | 389 | 2,8 |
| 18 | A2 | 0,1 | 43 | 6,7 |
| 19 | A2 | 0,1 | 111 | 4,8 |
| 20 | A2 | 0,1 | 389 | 3,6 |
| 21 | A2 | 1,0 | 43 | 5,1 |
| 22 | A2 | 1,0 | 111 | 4,0 |
| 23 | A2 | 1,0 | 389 | 2,9 |
| V7 | ohne | | 43 | 7,8 |
| V8 | ohne | | 111 | 6,1 |
| V9 | ohne | | 389 | 3,9 |
| Legende: ZKW = Zentrifugalkennwert | | | | |

Beispiele 24 bis 39, Vergleichsbeispiele V10 bis V12:

In einer weiteren Versuchsserie wurden Lösungen der Filtrationshilfsmittel in Konzentrationen von 0,1 g/l und 1,0 g/l bei einem Zentrifugalkennwert von 111 g (Drehzahl 800 UpM) sowie Entwässerungszeiten von 5, 10 und 30 s untersucht. Die Ergebnisse sind in Tab.7 zusammengefaßt.

Tab.7

| Entwässerung bei verschiedenen Entwässerungszeiten | | | |
|---|---|---|---|
| Bsp. | Filtrationshilfsmittel | EWD s | Restfeuchte Gew.-% |
| 24 | A1 | 5 | 3,7 |
| 25 | A1 | 10 | 3,5 |
| 26 | A1 | 30 | 3,0 |
| 27 | A2 | 5 | 4,6 |
| 28 | A2 | 10 | 4,3 |
| 39 | A2 | 30 | 4,0 |
| V10 | ohne | 5 | 6,8 |
| V11 | ohne | 10 | 6,7 |
| V12 | ohne | 30 | 6,0 |
| Legende: EWD = Entwässerungsdauer | | | |

## Patentansprüche

1. Verwendung von Alkyl- und/oder Alkenylpolyalkylenglycolethern der Formel **(I)**,

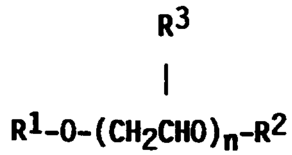

(I)

in der $R^1$ für einen geradkettigen oder verzweigten Alkyl- und/oder Alkenylrest mit 6 bis 22 Kohlenstoffatomen, $R^2$ für einen geradkettigen oder verzweigten Alkylrest mit 1 bis 8 Kohlenstoffatomen oder einen Benzylrest, $R^3$ für Wasserstoff oder einen Methylrest und n für Zahlen von 1 bis 30 stehen, als Hilfsmittel bei der Filtration und/oder Entwässerung von Mineral- und Kohlesuspensionen.

2. Verwendung nach Anspruch 1, dadurch gekennzeichnet, daß Alkyl- und/oder Alkenylpolyalkylenglycolether der Formel **(I)** eingesetzt werden, in der $R^1$ für einen Alkylrest mit 12 bis 18 Kohlenstoffatomen steht.

3. Verwendung nach mindestens einem der Ansprüche 1 und 2, dadurch gekennzeichnet, daß Alkyl- und/oder Alkenylpolyalkylenglycolether der Formel **(I)** eingesetzt werden, in der $R^2$ für einen Butylrest steht.

4. Verwendung nach mindestens einem der Ansprüche 1 bis 3, dadurch gekennzeichnet, daß Alkyl- und/oder Alkenylpolyalkylenglycolether der Formel **(I)** eingesetzt werden, in denen $R^3$ für Wasserstoff steht.

5. Verwendung nach mindestens einem der Ansprüche 1 bis 4, dadurch gekennzeichnet, daß Alkyl- und/oder Alkenylpolyalkylenglycolether der Formel **(I)** eingesetzt werden, in denen n für Zahlen von 2 bis 10 steht.

6. Verwendung nach mindestens einem der Ansprüche 1 bis 5, dadurch gekennzeichnet, daß die Alkyl- und/oder Alkenylpolyalkylenglycolether den Suspensionen in Mengen von 20 bis 1000 g pro Tonne Feststoff zugesetzt werden.

7. Verwendung nach mindestens einem der Ansprüche 1 bis 6, dadurch gekennzeichnet, daß die Alkyl- und/oder Alkenylpolyalkylenglycolether als Hilfsmittel bei der Filtration und/oder Entwässerung von solchen Suspensionen verwendet werden, die Scheeliterz, Eisenerze, Abgänge aus der Eisenerzaufbereitung oder gewaschene Kohle enthalten.

8. Verfahren zur Filtration und/oder Entwässerung von Mineral- und Kohlesuspensionen, dadurch gekennzeichnet, daß man den Suspensionen pro Tonne Feststoff 20 bis 1000 g Alkyl- und/oder Alkenylpolyalkylenglycolether der Formel **(I)**,

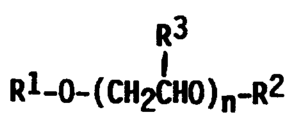

(I)

in der $R^1$ für einen geradkettigen oder verzweigten Alkyl- und/oder Alkenylrest mit 6 bis 22 Kohlenstoffatomen, $R^2$ für einen geradkettigen oder verzweigten Alkylrest mit 1 bis 8 Kohlenstoffatomen oder einen Benzylrest, $R^3$ für Wasserstoff oder einen Methylrest und n für Zahlen von 1 bis 30 stehen, zusetzt und die Suspensionen anschließend filtriert und/oder entwässert.

## Claims

1. The use of alkyl and/or alkenyl polyalkylene glycol ethers corresponding to formula **(I)**

$$R^1-O-(CH_2\overset{\overset{\displaystyle R^3}{|}}{C}HO)_n-R^2 \qquad (I)$$

in which $R^1$ is a linear or branched $C_{6-22}$ alkyl and/or alkenyl radical, $R^2$ is a linear or branched $c_{1-8}$ alkyl radical or a benzyl radical, $R^3$ is hydrogen or a methyl radical and n is a number of 1 to 30, as auxiliaries in the filtration and/or dewatering of mineral and coal suspensions.

2. The use claimed in claim 1, characterized in that alkyl and/or alkenyl polyalkylene glycol ethers corresponding to formula **(I)** in which $R^1$ is a $C_{12-18}$ alkyl radical, are used.

3. The use claimed in at least one of claims 1 and 2, characterized in that alkyl and/or alkenyl polyalkylene glycol ethers corresponding to formula **(I)**, in which $R^2$ is a butyl radical are used.

4. The use claimed in at least one of claims 1 to 3, characterized in that alkyl and/or alkenyl polyalkylene glycol ethers corresponding to formula **(I)**, in which $R^3$ is hydrogen, are used.

5. The use claimed in at least one of claims 1 to 4, characterized in that alkyl and/or alkenyl polyalkylene glycol ethers corresponding to formula **(I)**, in which n is a number of 2 to 10, are used.

6. The use claimed in at least one of claims 1 to 5, characterized in that the alkyl and/or alkenyl polyalkylene glycol ethers are added to the suspensions in quantities of 20 to 1000 g per tonne solids.

7. The use claimed in at least one of claims 1 to 6, characterized in that the alkyl and/or alkenyl polyalkylene glycol ethers are used as auxiliaries in the filtration and/or dewatering of suspensions containing scheelite ore, iron ores, waste tailings from the dressing of ores or washed coal.

8. A process for the filtration and/or dewatering of mineral and coal suspensions, characterized in that 20 to 1000 g alkyl and/or alkenyl polyalkylene glycol ethers corresponding to formula **(I)**

$$R^1-O-(CH_2\overset{\overset{\displaystyle R^3}{|}}{C}HO)_n-R^2 \qquad (I)$$

in which $R^1$ is a linear or branched $C_{6-22}$ alkyl and/or alkenyl radical, $R^2$ is a linear or branched $C_{1-8}$ alkyl radical or a benzyl radical, $R^3$ is hydrogen or a methyl radical and n is a number of 1 to 30,
are added to the suspensions per tonne solids and the suspensions are subsequently filtered and/or dewatered.

## Revendications

1. Utilisation d'alkyl- et/ou d'alcénylpolyalkylèneglycoléthers de formule (I),

$$R^1-O-(CH_2\overset{\overset{\displaystyle R^3}{|}}{C}HO)_n-R^2 \qquad (I)$$

dans laquelle $R^1$ représente un radical alkyle et/ou alcényle à chaîne droite ou ramifiée, comportant 6 à 22 atomes de carbone, $R^2$ correspond à un radical alkyle à chaîne droite ou ramifiée, comportant 1 à 8 atomes de carbone ou à un radical benzyle, $R^3$ représente l'hydrogène ou un radical méthyle, et n correspond à un nombre de 1 à 30, comme adjuvants pour la filtration et/ou la déshydratation des suspensions de minéral et de charbon.

**2.** Utilisation selon la revendication 1, caractérisée en ce que sont mis en oeuvre des alkyl- et/ou des alcénylpolyalkylèneglycoléthers de formule (I), dans laquelle $R^1$ représente un radical alkyle comportant 12 à 18 atomes de carbone.

**3.** Utilisation selon une des revendications 1 et 2, caractérisée en ce que sont mis en oeuvre des alkyl- et/ou des alcénylpolyalkylèneglycoléthers de formule (I), dans laquelle $R^2$ représente un radical butyle.

**4.** Utilisation selon au moins une des revendications 1 à 3, caractérisée en ce que sont mis en oeuvre des alkyl- et/ou des alcénylpolyalkylèneglycoléthers de formule (I), dans laquelle $R^3$ représente l'hydrogène.

**5.** Utilisation selon au moins une des revendications 1 à 4, caractérisée en ce que sort mis en oeuvre des alkyl- et/ou des alcénylpolyalkylèneglycoléthers de formule (I), dans laquelle n représente un nombre de 2 à 10.

**6.** Utilisation selon au moins une des revendications 1 à 5, caractérisée en ce que les alkyl- et/ou alcénylpolyalkylèneglycoléthers sont additionnés aux suspensions en quantités de 20 à 1000 g par tonne de matière solide.

**7.** Utilisation selon au moins une des revendications 1 à 6, caractérisée en ce que les alkyl- et/ou alcénylpolyalkylèneglycoléthers sont utilisés comme adjuvants pour la filtration et/ou la déshydratation de suspensions qui renferment du minerai de schéelite, des minerais de fer, des rejets du traitement des minerais de fer ou du charbon lavé.

**8.** Procédé de filtration et/ou de déshydratation de suspensions de minéral et de charbon, caractérisé en ce que l'on additionne aux suspensions, par tonne de matière solide, 20 à 1000 g d'alkyl- et/ou d'alcénylpolyalkylèneglycoléthers de formule (I)

$$R^1\text{-O-}(CH_2\overset{\displaystyle R^3 \atop |}{C}HO)_n\text{-}R^2 \qquad (I)$$

dans laquelle $R^1$ représente un radical alkyle et/ou alcényle à chaîne droite ou ramifiée, comportant 6 à 22 atomes de carbone, $R^2$ correspond à un radical alkyle à chaîne droite ou ramifiée, comportant 1 à 8 atomes de carbone ou à un radical benzyle, $R^3$ représente l'hydrogène ou un radical méthyle, et n correspond à un nombre de 1 à 30, et en ce que l'on filtre et/ou déshydrate ensuite les suspensions.